# EUROPEAN PATENT APPLICATION

(11) **EP 2 082 829 A1**
(43) Date of publication of application: **29.07.2009**
(21) Application number: 07830350.0
(22) Date of filing: 23.10.2007
(51) Int. Cl.: B23Q 1/52, B23Q 1/40, F16C 19/38

(54) **ANGLE INDEXING DEVICE FOR MACHINE TOOL**

(30) Priority: 26.10.2006 JP 2006291813
(71) Applicant: Tsudakoma Kogyo Kabushikikaisha, Kanazawa-shi, Ishikawa 921-8650 (JP)
(72) Inventor: TATSUDA, Yoshinori, Kanazawa-shi Ishikawa 9218650 (JP)
(74) Representative: Samson & Partner
(86) International application number: PCT/JP2007/070616
(87) International publication number: WO 2008/050747

(57) **Abstract**

An angular indexing apparatus for a machine tool includes a housing, a rotating shaft, and a drive motor, the housing having a through hole, the rotating shaft (52) having a member that is rotationally driven secured to one end thereof, the rotating shaft being rotatably supported by a bearing in the through hole of the housing, the drive motor rotationally driving the rotating shaft to index an angular position thereof. The bearing is a roller bearing which has a plurality of rows and which is capable of supporting an axial-direction load and a radial-direction load. The rotating shaft is supported by two or more of the bearings disposed apart from each other in a direction of axis of rotation thereof.

## Description

### Technical Field

The present invention relates to an angular indexing apparatus used in a machine tool. More particularly, the present invention relates to an angular indexing apparatus including a housing, a rotating shaft, and a drive motor. The housing has a through hole. An object that is rotationally driven is secured to one end of the rotating shaft. The rotating shaft is rotatably supported by a bearing in the through hole of the housing. The drive motor is provided for rotationally driving the rotating shaft, to index an angular position of the rotating shaft.

### Background Art

As an angular indexing apparatus such as that described above, angular indexing apparatuses discussed in, for example, Patent Documents 1 and 2 are known.

The apparatus discussed in Patent Document 1 is used in a 5-axis control machining apparatus serving as a machine tool, and is formed as a head supporting unit that supports a head (corresponding to what is called an object that is rotationally driven in the present invention) that rotationally drives a tool main shaft. The head supporting unit has a drive shaft (rotating shaft) that is rotatably supported in a body (housing) and that is rotationally driven, with the aforementioned head being mounted to one end of the drive shaft. By numerical value control, the drive shaft is rotated by an angle corresponding to a setting, to index the angular position (rotational position) of the head.

The apparatus discussed in Patent Document 2 is a rotating indexing table used in a machine tool and is provided with a rotor (rotating shaft) rotatably supported in a housing. The indexing table (corresponding to what is called an object that is rotationally driven in the present invention) is mounted to an end of the rotor. By numerical value control, the rotor is rotated by an angle corresponding to a setting, to index the angular position of the indexing table.

In each of the angular indexing apparatuses discussed in the aforementioned Patent Documents 1 and 2, the rotating shaft that supports the object that is rotationally driven is rotatably supported to the housing by one cross roller bearing. Incidentally, the cross roller bearing can receive an axial-direction load and a radial-direction load.

For example, during processing of a workpiece, a large load is applied to the aforementioned rotating shaft that supports an object that is rotationally driven. Therefore, for obtaining high processing precision, there is a demand for high supporting rigidity. However, in the structure in which the rotating shaft is supported by a single bearing (cross roller bearing) as in the aforementioned related arts, when an attempt is made to obtain high supporting rigidity, a bearing having a large diameter must be used. As a result, the size of the apparatus is increased in the direction of the diameter of the bearing. In addition, the larger the diameter of the bearing, the lower the allowable rotational speed. Therefore, as the diameter of the bearing is increased for increasing the supporting rigidity, the rotational speed is limited to a low rotational speed, as a result of which the apparatus cannot be driven at a desired rotational speed. Further, the larger the diameter of the bearing, the lower the run-out precision. Therefore, as the diameter of the bearing is increased, processing precision is reduced.
[Patent Document 1] Japanese Unexamined Patent Application Publication No. 2-116137
[Patent Document 2] Japanese Examined Utility Model Registration Application Publication No. 8-10504

### Disclosure of Invention

### Problems to be Solved by the Invention

Accordingly, in an angular indexing apparatus for a machine tool, the present invention provides a structure that supports a rotating shaft by high supporting rigidity without reducing processing precision or increasing the size of the apparatus.

### Means for Solving the Problems

On the basis of the aforementioned object, the present invention presupposes the aforementioned angular indexing apparatus, in which a bearing for rotatably supporting a rotating shaft is a roller bearing which has a plurality of rows and which can support an axial-direction load and a radial-direction load, and in which the rotating shaft is supported by two or more of the aforementioned bearings disposed apart from each other in the direction of axis of rotation thereof.

In the present invention, each bearing may be a triplet-row cylindrical roller bearing (triplet-row roller bearing/axial radial roller bearing) which is one type of slewing bearing of a composite-roller type.

### Advantages

According to the angular indexing apparatus of the present invention, a roller bearing which has a plurality of rows and which can receive a radial-direction load and a radial-direction load that are higher than those received by a cross roller bearing used in the related arts is used. Moreover, two or more of the roller bearings having a plurality of rows are used to support the rotating shaft. Therefore, it is possible to obtain a very high supporting rigidity without increasing the diameters of the bearings. Brief Description of Drawings

[Fig. 1] Fig. 1 is a front sectional view of an angular indexing apparatus according to an embodiment of the present invention.
[Fig. 2] Fig. 2 is a front sectional view of a processing head included in the angular indexing apparatus according to the present invention.
[Fig. 3] Fig. 3 is a front sectional view of a bearing according to an embodiment used in the present invention.
[Fig. 4] Fig. 4 is a perspective view of an exemplary machine tool to which the processing head according to the present invention is applied.

### Reference Numerals

- 1: machine tool
- 10: processing head
- 20: spindle unit
- 21: spindle
- 30: first supporting head
- 30a,: 30b leg
- 30c: base
- 44: rotation detecting unit
- 50: second supporting head (angular indexing apparatus)
- 51: housing
- 52: rotating shaft
- 52a: shaft member
- 52b: flange member
- 53: DD motor
- 53a: stator
- 53b: rotor
- 54: clamp sleeve
- 55: distributor
- 60: triplet-row cylindrical roller bearing
- 61: inner ring
- 62, 64, 66: cylindrical roller
- 63: outer ring

### Best Modes for Carrying Out the Invention

An embodiment of the present invention will hereunder be described in detail with reference to the drawings.

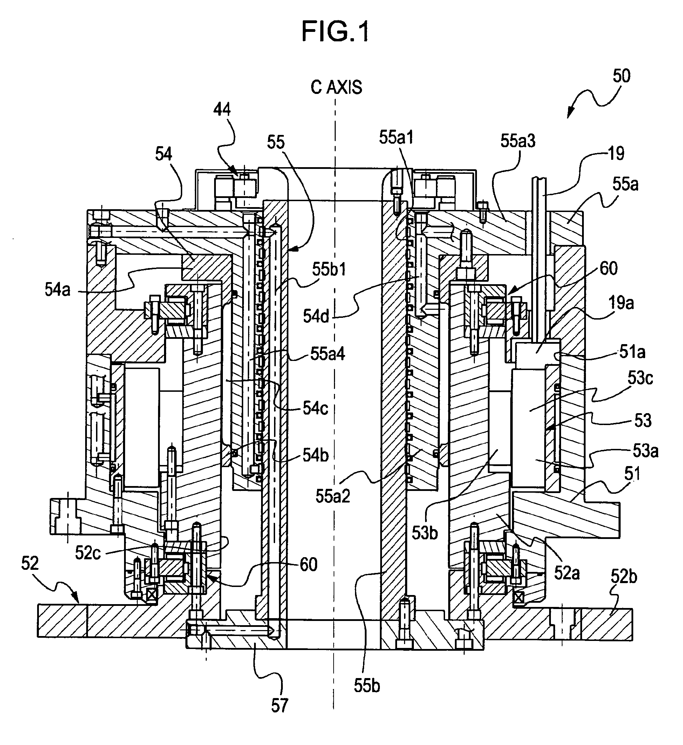

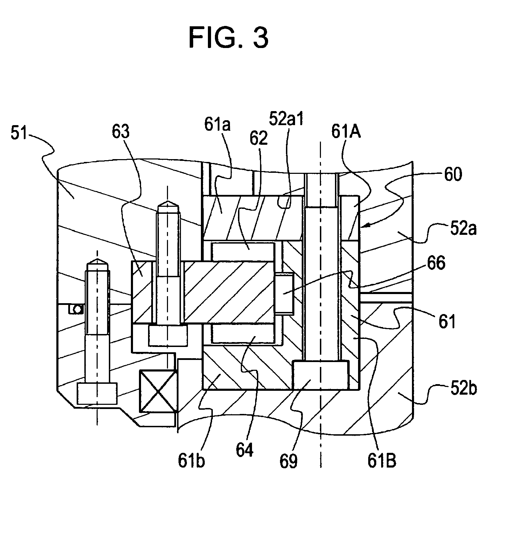

Figs. 1 to 3 show an embodiment of the present invention. An angular indexing apparatus according to the present invention will hereunder be described taking as an example a processing head mounted to a gate-type machine tool (machining center), which is one type of composite machining apparatus (machine tool) such as a 5-axis machining apparatus or a multi-axis machining apparatus. The processing head supports a spindle (main shaft) to which a tool is mounted.

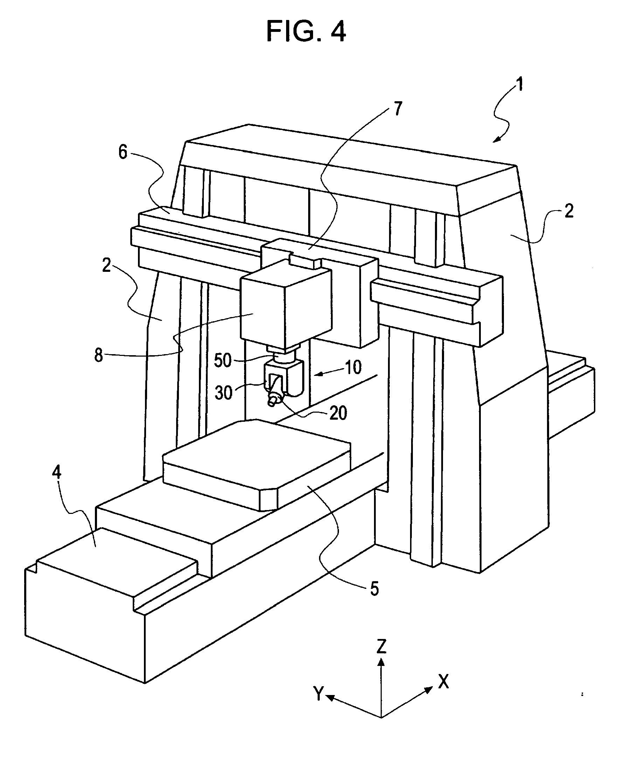

Fig. 4 shows a gate-type machine tool 1 provided with a processing head 10 to which the present invention is applied. Such a gate-type machine tool 1 includes left and right columns 2 and 2, a cross rail 6, a saddle 7, a ram 8, and a table 5. The left and right columns 2 and 2 are annexed to a head 4. The cross rail 6 moves vertically (in the direction of a Z axis) along the columns 2 and 2. The saddle 7 moves horizontally towards the left and right (in the direction of a Y axis) along the cross rail 6. The ram 8 moves along the saddle 7 in the direction of the Z axis. The table 5 moves along the head 4 in a front-back direction (in the direction of an X axis). In addition, the processing head 10 including a spindle unit 20, provided with a spindle to which a tool is mounted, is mounted to the ram 8.

In the gate-type machine tool 1, during processing of a workpiece, by numerical-value control based on a preset program, the table 5, the cross rail 6, the saddle 7, and the ram 8 are moved, and the processing head 10 indexes the angular position (rotation position) of the spindle unit 20. By this, in the machine tool, it is possible to abut the tool upon each processing surface of the workpiece at a suitable angle and to process the workpiece, and to, for example, cut and process the workpiece having a complicated shape.

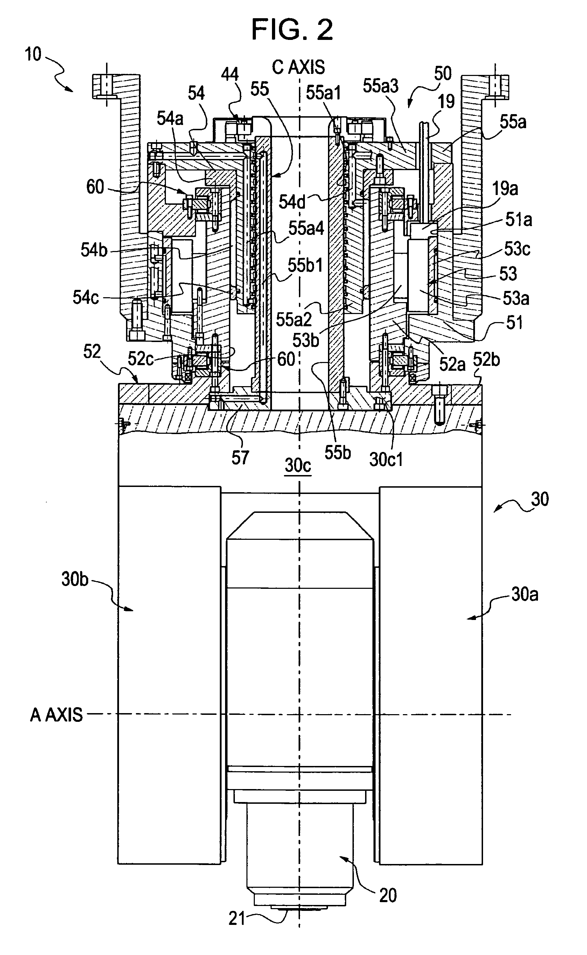

The processing head 10 in the illustrated embodiment includes the spindle unit 20, a first supporting head 30, and a second supporting head 50 (Fig. 2). The spindle unit 20 is provided with a spindle 21 to which a tool is mounted. The first supporting head 30 supports the spindle unit 20. The second supporting head 50 supports the first supporting head 30. In addition, in the embodiment, the first supporting head 30 (a base 30c of the first supporting head 30) corresponds to what is called a member that is rotationally driven in the present invention, and the second supporting head 50 corresponds to what is called the angular indexing apparatus in the present invention.

The spindle unit 20 is a spindle head having a drive motor built therein, and rotationally drives at a high speed the spindle 21, rotatably supported in a housing thereof, by the built-in drive motor.

The first supporting head 30 supports the spindle unit 20, and causes the spindle unit 20 to rotate around an axis (hereunder referred to as "A axis") that is perpendicular to an axis of rotation of the spindle 21, to index the angular position thereof.

The first supporting head 30 has the shape of a fork in which a pair of legs 30a and 30b are mounted to the base 30c. The spindle unit 20 is supported between the legs 30a and 30b. In addition, the spindle unit 20 is supported by a pair of supporting shafts that are rotationally supported in the interiors of the legs 30a and 30b.

As a driving source of the angular indexing apparatus that rotationally drives the spindle unit 20, the first supporting head 30 uses a direct-driving drive motor (hereunder referred to as the "DD motor" (not shown)) having a motor stator and a motor rotor disposed in the housing and having the motor rotor connected to the supporting shafts that support the spindle unit. In the embodiment, the DD motor is provided in only one of the pair of legs 30a and 30b, that is, the leg 30a.

Next, the second supporting head 50 in the illustrated processing head 10 to which the present invention is applied will hereunder be described in detail.

The second supporting head 50 is mounted to the machine tool 1 by, for example, a bracket, and supports the above-described first supporting head 30. That is, the spindle unit 20 to which a tool for processing a workpiece is mounted is supported by the second supporting head 50 through the first supporting head 30, and is supported by the machine tool by the second supporting head 50. The second supporting head 50 causes the first supporting head 30 to rotate around a perpendicular axis (axis parallel to the Z axis of the machine tool; hereunder referred to as "C axis"), to index its angular position (Fig. 2).

As shown in Fig. 1, the second supporting head 50 includes, as a main body, a housing 51 having a through hole 51a extending through the second supporting head 50 in the direction of the C axis. The second supporting head 50 is provided with a rotating shaft 52, to which the first supporting head 30 is mounted, by disposing a shaft member 52a in the through hole 51a. In the embodiment, a triplex-row cylindrical roller bearing 60 is used as a bearing that rotatably supports the rotating shaft 52 with respect to the housing 51. Two of the triplex-row cylindrical roller bearings 60 and 60 support the rotating shaft 52.

The second supporting head 50 also includes a DD motor 53, a clamp sleeve 54, and a rotary joint 55. The DD motor 53 is disposed in the through hole 51a of the housing 51 and is used for rotationally driving the rotating shaft 52. The clamp sleeve 54 is used for maintaining the rotational position of the rotating shaft 52. The rotary joint 55 is used for supplying fluid to the first supporting head 30.

The DD motor 53 comprises a stator 53a and a rotor 53b. The stator 53a is secured to the housing 51 through a stator sleeve 53c. The rotor 53b is secured to the rotating shaft 52 at a position opposing an inner peripheral surface of the starter 53a. Exciting current for driving the DD motor 53 is supplied using a cable 19 connected to the DD motor 53 through a connector 19a.

The rotating shaft 52 includes the shaft member 52a and a flange member 52b. The shaft member 52a is rotatably supported in the through hole 51a of the housing 51 by the triplex-row cylindrical roller bearings 60. The flange member 52b is mounted to an end of the shaft member 52a adjacent to the first supporting head 30, and widens in a radial direction (a direction perpendicular to the C axis). A through hole 52c into which the rotary joint 55 is inserted is formed in the rotating shaft 52.

The rotor 53b of the DD motor 53 is externally fitted and secured to the outer peripheral surface of the shaft member 52a. Rotation of the rotor 53b causes the shaft member 52a to be rotationally driven around the C axis as center. In addition, the flange member 52b is mounted to the shaft member 52a with a plurality of threaded members disposed in a circumferential direction, and is integrated to the shaft member 52a. Further, a plurality of threaded members are screwed into the flange member 52b in the circumferential direction, and the base 30c of the first supporting head 30 is mounted to the flange member 52b with the threaded members. Therefore, rotationally driving the rotating shaft 52 by the DD motor 53 causes the first supporting head 30 to rotate around the C axis along with the rotating shaft 52.

The rotary joint 55 comprises a distributor 55a and a shaft 55b. The distributor 55a is secured to the housing 51. The shaft 55b is rotatably fitted to a through hole 55a1, formed in the distributor 55a, and is disposed with respect to the C axis so as to be concentric with the distributor 55a.

The distributor 55a comprises a cylindrical portion 55a2 and a flange portion 55a3. The cylindrical portion 55a2 is disposed in the through hole 52c of the rotating shaft 52. The flange portion 55a3 is formed at an end of the cylindrical portion 55a2 at a side opposite to a side of the first supporting head 30, and widens in the radial direction. At the flange portion 55a3, the distributor 55a is mounted to the housing 51 with a plurality of threaded members disposed in the circumferential direction.

A disc-shaped flange member 57 is mounted to an end of the shaft 55b adjacent to the first supporting head 30. The shaft 55b is mounted to the flange member 52b of the rotating shaft 52 through the flange member 57. Therefore, rotation of the rotating shaft 52 causes the shaft 55b to also rotate. The flange member 57 is fitted to a circular recess 30c1 formed in the base 30c of the first supporting head 30. The flange member 57 and the recess 30c1 of the base 30c allow the first supporting head 30 to be positioned with respect to the second supporting head 50.

A plurality of fluid flow paths 55a4 for receiving fluid from the outside are formed in the cylindrical portion 55a2 of the distributor 55a so as to be displaced from each other in the circumferential direction. A plurality of fluid flow paths 55b1 corresponding to the fluid flow paths 55a4 of the distributor 55a are also formed in the shaft 55b so as to be displaced from each other in the circumferential direction. The fluid flow paths 55a4 and the corresponding fluid flow paths 55b1 are connected to each other through annular grooves formed at peripheral surfaces where the distributor 55a and the shaft 55b are fitted to each other. Even if the shaft 55b is rotated, the state of connection thereof can be maintained. The plurality of fluid flow paths 55b1, formed in the shaft 55b, are connected to a rotary joint (not shown) built in the first supporting head 30. Therefore, fluid supplied to the distributor 55a of the rotary joint 55 from the outside flows to the rotary joint of the first supporting head 30 through the shaft 55b, and is supplied to the spindle unit 20 through the rotary joint of the first supporting head 30.

The clamp sleeve 54 for maintaining the rotational position of the rotating shaft 52 is interposed between the shaft member 52a of the rotating shaft 52 and the distributor 55a secured to the housing 51. At a flange portion 54a, the clamp sleeve 54 is mounted to the distributor 55a with a plurality of threaded members disposed in the circumferential direction, and is provided so that it is allowed to rotate relative to the rotating shaft 52. An annular groove 54c opening at the cylindrical-portion-55a2-side of the distributor 55a is formed in a cylindrical portion 54b of the clamp sleeve 54, and a space formed by the annular groove 54c and outer peripheral surface of the cylindrical portion 55a2 of the distributor 55a becomes a pressure chamber.

By supplying pressure fluid to the pressure chamber through a fluid flow path 54d formed in the distributor 55a, a thin-walled portion of the cylindrical portion 54b corresponding to the annular groove 54c is deformed in the direction in which the diameter is increased. As a result, a tightening force acting in the direction in which the diameter is increased acts upon the rotating shaft 52. Therefore, a state in which the rotating shaft 52 is prevented from rotating (clamped state) results.

In the illustrated embodiment, a rotation detecting unit 44 for detecting the amount of rotation of the rotating shaft 52, that is, the angular position of the first supporting head 30 is provided at the upper end of the rotary joint 55. A detection signal of the rotation detecting unit 44 is transmitted to a controlling device of the machine tool, and is used to control the rotation of the first supporting head 30.

As mentioned above, the bearings that rotatably support the rotating shaft 52 with respect to the housing 51 are triplex-row cylindrical roller bearings (triplex-row roller bearings/axial radial roller bearings) 60, which are slewing bearings of a composite-roller type. In the embodiment, two triplex-row cylindrical roller bearings 60 and 60 are disposed apart from each other in the direction of the axis of rotation (the direction of the C axis) of the rotating shaft 52.

The triplex-row cylindrical roller bearings 60 are publicly known bearings. More specifically, basically, the bearings 60 each include an inner ring 61, an outer ring 63, and a plurality of cylindrical rollers 62, 64, and 66 disposed between peripheral surfaces where the inner ring 61 and the outer ring 63 oppose each other.

Each inner ring 61 is divided into a pair of upper and lower inner-ring divided members 61A and 61B. Using a bolt 69, the inner-ring divided members 61A and 61B are fastened together to a mounting surface 52a1 of the shaft member 52a of the rotating shaft 52. The outer peripheral surface of the inner ring 61 is provided with a pair of jaw portions 61a and 61b opposing respective side surfaces in the axial direction of the outer ring 63. The cylindrical rollers 62 and 64 used for absorbing axial load and held by a holding member (not shown) are interposed between the outer ring 63 and the jaw portions 61a and 61b at the respective sides. In addition, the cylindrical roller 66 used for absorbing radial load and held by a holding member (not shown) is interposed between the outer peripheral surface of the inner ring 61 and the outer ring 63.

Accordingly, in the second supporting head 50 to which the present invention is applied, as bearings for rotatably supporting the rotating shaft 52 in the housing 51, the triplex-row cylindrical roller bearings 60 which can receive an axial-direction load and a radial-direction load that are higher than those received by a cross roller bearing having the same diameter are used. In addition, two triplex-row cylindrical roller bearings 60 are disposed apart from each other in the direction of the C axis, and the rotating shaft 52 is supported by the two triplex-row cylindrical roller bearings 60. This makes it possible to support the first supporting head 30 and to support with high supporting rigidity the rotating shaft 52 that is rotationally driven for indexing the angular position of the first supporting head 30. Therefore, the apparatus has a structure that can provide high supporting rigidity without using a bearing having a large diameter, as a result of which the apparatus is not increased in size and processing precision is not reduced.

Although, in the illustrated embodiment, triplex-row cylindrical roller bearings are used as bearings that support the rotating shaft 52, it is possible to use conical roller bearings having a plurality of rows instead. That is, what is called a roller bearing having a plurality of rows in the present invention is not limited to a triplex-row cylindrical roller bearing according to the embodiment. Accordingly, a conical roller bearing having a plurality of rows may also be used. In addition, other types of roller bearings that can support an axial-direction load and a radial-direction load may be used. Further, the number of bearings is not limited to two as in the embodiment, so that three or more bearings may be used if there is enough space.

The angular indexing apparatus to which the present invention is applied is not limited to that of the above-described embodiment. For example, the angular indexing apparatus may be a rotating table apparatus that rotationally drives a circular table, on which a workpiece is placed, and that indexes its angular position. When the angular indexing apparatus is a rotating table apparatus, the aforementioned circular table corresponds to what is called a member that is rotationally driven in the present invention.

The present invention is not limited to the embodiments described above, so that various modifications can be made without departing from the scope of the claims according to the present invention.

## Claims

1. An angular indexing apparatus (50) for a machine tool, including a housing (51), a rotating shaft (52), and a drive motor (53), the housing (51) having a through hole (51a), the rotating shaft (52) having a member (30) that is rotationally driven secured to one end thereof, the rotating shaft (52) being rotatably supported by a bearing (60) in the through hole (51a) of the housing (51), the drive motor (53) rotationally driving the rotating shaft (52) to index an angular position thereof,
wherein the bearing (60) is a roller bearing which has a plurality of rows and which is capable of supporting an axial-direction load and a radial-direction load, and
wherein the rotating shaft (52) is supported by two or more of the bearings (60) disposed apart from each other in a direction of axis of rotation thereof.

2. The angular indexing apparatus (50) for the machine tool according to Claim 1, wherein each bearing (60) is a triplex-row cylindrical roller bearing.
